# EUROPÄISCHE PATENTSCHRIFT

(11) **EP 1 468 803 B1**
(45) Veröffentlichungstag und Bekanntmachung des Hinweises auf die Patenterteilung: **26.07.2006**
(21) Anmeldenummer: 04005165.8
(22) Anmeldetag: 04.03.2004
(51) Int. Cl.: B29B 7/74, B01F 7/04, B29C 47/38, B29C 47/76, B29K 83/00

(54) **Verfahren zur kontinuierlichen Herstellung von hochviskosen HTV-Siliconmassen**
Process for manufacturing high viscosity HTV silicone compositions
Procédé de préparation de compositions de silicones de viscosité élevée vulcanisables à chaud

(30) Priorität: 27.03.2003 DE 10313941
(43) Veröffentlichungstag der Anmeldung: 20.10.2004
(73) Patentinhaber: Wacker Chemie AG, 81737 München (DE)
(72) Erfinder: Heisler, Manfred, Dr., 84547 Emmerting (DE); Schuster, Johann, Dr., 84547 Emmerting (DE); Schlierf, Alois, 84489 Burghausen (DE); Stary, Fridolin, Dr., 84489 Burghausen (DE)
(74) Vertreter: Fritz, Helmut

(56) Entgegenhaltungen:
- EP-A- 0 841 363
- EP-A- 0 909 777
- EP-A- 1 110 691
- EP-A- 1 110 696
- EP-A- 1 158 015
- EP-A- 1 203 650
- WO-A-92/13694
- DE-A- 4 005 823
- DE-A- 19 962 565
- US-A- 4 797 080
- US-A- 5 854 343
- US-B1- 6 323 262
- KLOHN W: "KONTINUIERLICH ARBEITENDE KNET- UND EXTRUSIONSMASCHINE CONTINUOUS COMPOUNDING AND EXTRUDING MACHINE" PLASTVERARBEITER, ZECHNER UND HUETHIG VERLAG GMBH. SPEYER/RHEIN, DE, Bd. 45, Nr. 10, 1. Oktober 1994 (1994-10-01), Seiten 90,92,94-95, XP000477138 ISSN: 0032-1338

## Beschreibung

Die Erfindung betrifft ein Verfahren zur Herstellung von HTV-Organopolysiloxanzusammensetzungen in einer Knetkaskade mit wenigstens zwei in Reihe nebeneinander angeordneten Knetkammern und in einem oszillierenden Pilgerschrittkneter.

In der EP 570387 A ist ein Verfahren zur kontinuierlichen Herstellung von HTV-Siliconmassen beschrieben, bei dem die Füllstoffeinarbeitung in das Polysiloxan und die Entgasung in einem Schritt in einem oszillierenden Einwellenpilgerschrittkneter erfolgt. Es ist allerdings eine Trennung der Maschine möglich, so daß im ersten Kneter der Mischvorgang und im zweiten Kneter der Entgasungsvorgang stattfinden kann. Aufgrund der Phaseninversion, trockenen Reibung und der Mechanodestruktion hochpolymerer Polyorganosiloxane ist die Lagerstabilität reduziert. Auch können mit diesem Maschinenkonzept keine befriedigenden Durchsätze erreicht werden.

Eine Verfahrensweiterentwicklung wird beschrieben in EP 1033389 A. Zur Verbesserung vor allem der Lagerstabilität wird das Verfahren erweitert um eine Kautschukrückführung, die eine Phaseninversion verhindern und damit die Tendenz zur Verstrammung und Brüchigkeit der so hergestellten HTV-Massen mindern soll. Zweistufige Verfahren werden in in EP 1033389 A nicht erwähnt. Das Verfahren ist durch die Produktrückführung technisch sehr aufwendig, so daß eine wirtschaftliche Fahrweise nicht möglich ist. Auch der Durchsatz ist bei diesem Verfahren verbesserungsbedürftig.

EP 1110696 A beschreibt ein zweistufiges Verfahren zur Herstellung von HTV-Siliconmassen. Hierbei wird im 1. Verfahrensteil in einem gleichlaufenden Zweiwellenextruder die Vermischung von Füllstoff und Siliconpolymer und auch Beladungsmitteln zur Hydrophobierung und Weichmacher vorgenommen. Im 2.Verfahrensteil wird die Mischung dann fertig compoundiert und in einem oszillierenden Einwellenpilgerschrittkneter entgast. Das Verfahren von EP 1110696 A soll sich gegenüber EP 570387 A gerade in Richtung Durchsatz und verbesserter Füllstoffverteilung hervorheben. Allerdings beschreibt EP 570387 A, daß Zweiwellenmaschinen hinsichtlich Maschinenverschleiß und Metallabrieb problematisch sind, unerwünschte Graufärbungen der produzierten HTV-Massen können die Folge sein. Dies trifft insbesondere zu für sehr hochgefüllte steife Mischungen.

EP 807509 A beschreibt die kontinuierliche Herstellung von lagerstabilen Organopolysiloxanzusammensetzungen unter Verwendung einer speziellen Knetmaschinenkaskade. Zielrichtung sind Grundmassen für additionsvernetzende Flüssigkautschuke. Eine Entgasung der Masse erfolgt nur über einen Entgasungsbehälter, nicht über eine speziell konzipierte Maschine. Gemäß EP 807509 A ist eine Herstellung von HTV-Massen unter Verwendung einer Knetkaskade auch möglich. Auf Grund nicht vorhandener bzw. ungeeigneter Entgasungsmöglichkeiten sind HTV- Kautschuke, gefertigt nach diesem Verfahren, nicht einsetzbar.

Es bestand also die Aufgabe ein Verfahren zu finden, welches die Nachteile des bisher bekannten Standes der Technik vermeidet.

Gegenstand der Erfindung ist ein Verfahren zur Herstellung von HTV-Organopolysiloxanzusammensetzungen (A) mit einer bei 25°C gemessenen Viskosität von mindestens 500 Pa.s., bei dem Organopolysiloxane (O) und Füllstoffe (F)
in einer ersten Verfahrensstufe in einer Knetkaskade mit wenigstens zwei in Reihe nebeneinander angeordneten Knetkammern, die jeweils zwei achsparallele, gleich- oder gegensinnig antreibbare Knetwerkzeuge enthalten und die durch quer zu den Achsen der Knetwerkzeuge passierbare Öffnungen miteinander verbunden sind, wobei die erste Knetkammer eine Beschickungsöffnung und die letzte Knetkammer eine Austragsöffnung aufweisen, zu Rohmischungen vermischt und geknetet werden und die Rohmischungen
in einer zweiten Verfahrensstufe in einem oszillierenden Pilgerschrittkneter geknetet und entgast werden.

Im erfindungsgemäßen Verfahren sind hohe Durchsätze fahrbar, die verfahrenstechnischen Aufgabenstellungen sind auf 2 Stufen verteilt, jede Stufe ist für sich besser optimierbar.
Es resultieren gut ausgeheizte Mischungen mit nur geringen Anteilen an restlichen flüchtigen Verbindungen, die Verfärbung der Vulkanisate ist gering, gleiches gilt für die Gefahr der Blasenbildung bei der Extrusion der erfindungsgemäß produzierten HTV-Organopolysiloxanzusammensetzungen. Auch trockene schwer kompaktierbare Mischungen sind problemlos herstellbar. Bei Einsatz gleicher Rohstoffe ist die Lagerstabilität verbessert gegenüber den nach EP 570387 A hergestellten Organopolysiloxanzusammensetzungen.

Im erfindungsgemäßen Verfahren verfügt jede Knetkammer der Knetkaskade über einen separaten Antrieb und somit kann die Steuerung der Intensität des Misch- Kompaktier- und Knetprozesses kammerspezifisch sehr exakt festgelegt werden.

Eine derartig exakte Einflußnahme auf den Misch- Kompaktierund Knetprozesses ist mit einer Zweiwellenmaschine, so wie in EP 1110696 A beschrieben, nicht möglich. Die Kautschukmasse ist spätestens in der letzten Kammer der Knetkaskade vollkommen homogen wie ein fertiger Kautschuk, zudem hat sie eine über die Antriebe der einzelnen Knetkammern reproduzierbar zugeführte Knetleistung erfahren.

Die erfindungsgemäß eingesetzte Knetkaskade ist eine Knetmaschine und erlaubt eine Steuerung der Intensität des Knetprozesses und der Verweilzeit, weil Drehzahl und Drehrichtung der Knetwerkzeuge in den einzelnen Knetkammern unnabhängig voneinander beliebig einstellbar sind.

Da in der Knetkaskade kein freier Gasraum vorhanden ist, kann auf Schutzgas verzichtet werden.

Der Produktaustrag aus der Knetkaskade stellt kein Problem dar, weil die fertigen Zusammensetzungen durch die Knetwerkzeuge leicht zur Austragsöffnung befördert werden können. Die letzte Knetkammer weist vorzugsweise Pumpflügel für den Produktaustrag auf.

Die Knetkaskade besteht vorzugsweise aus maximal 10 Knetkammern, vorzugsweise sind maximal 6 Kammern ausreichend. Dabei weist die letzte Kammer vorzugsweise Pumpflügel für den Produktaustrag auf. Die Zudosierung und Einmischung der Einsatzstoffe, nämlich der Füllstoffe (F), Organopolysiloxane (O) und gegebenenfalls Zusätze in die HTV-Organopolysiloxanzusammensetzungen (A) kann in beliebiger Reihenfolge der Einsatzstoffe geschehen; auch kann die Zudosierung z.B. des/der Füllstoffe(s) (F) in eine oder mehrere Kammern(n) der Knetkaskade erfolgen. Vorzugsweise wird alles Organopolysiloxan (O) in die erste Kammer dosiert. Es ist auch möglich, einen Teil des Organopolysiloxans (O) in eine spätere Kammer zu dosieren, z.B um die Vikosität der HTV-Organopolysiloxanzusammensetzung (A) zu erniedrigen: In alle Kammern können die erforderlichen Füllstoffe (F) dosiert werden, vorzugsweise wird in die letzte Kammer kein Füllstoff (F) dosiert. Dabei ist es möglich die gesamte erforderliche Fullstoffmenge nur in beispielsweise einer/zwei/drei oder vier der ersten Kammern zuzugeben, eine Füllstoffverteilung anteilig über alle ist allerdings auch moglich. Werden Strukturverbesserer (S) eingesetzt, so werden diese vorzugsweise in die ersten Kammern, insbesondere in der ersten Kammer dosiert. Vorzugsweise wird in die letzte Kammer kein Strukturverbesserer (S) dosiert. Vorzugsweise weist die Knetkaskade mindestens drei, insbesondere mindestens fünf Knetkammern auf.

Zwischen einzelnen oder allen Knetkammern können Siebe, Stauscheiben oder Schieber zur Stauung der Organopolysiloxanzusammensetzungen angebracht sein. Diese Elemente können hinsichtlich ihrer Lage und der von Ihnen freigebbaren Durchlaßöffnung verstellbar sein. Dadurch läßt sich die Verweilzeit in den einzelnen Kammern beeinflussen.

Vorzugsweise sind die Knetwerkzeuge Knetschaufeln, Walzen oder Polygonscheiben.

Vorzugsweise sind in der Knetmaschine neben der Beschickungsöffnung der ersten Knetkammer weitere Beschickungsöffnungen vorhanden, die in die einzelnen Knetkammern führen oder zwischen zwei Knetkammern angeordnet sind. Vorzugsweise weist jede Knetkammer eine Beschickungsöffnung auf. Insbesondere sind die Beschickungsöffnungen der ersten 1, 2 oder 3 Knetkammern für die Beschickung mit Feststoff geeignet und die anderen Beschickungsöffnungen für die Zudosierung von Flüssigkeiten vorgesehen.
Vorzugsweise verfügt jede Knetkammer über einen separat regelbaren Antrieb, der jeweils vorzugsweise eine Drehmomentmessung aufweist. Das Drehmoment ist ein Maß für die Viskosität der Mischung in der Kammer.

Vorzugsweise sind die Knetkammern beheizbar oder/oder kuhlbar, insbesondere einzeln bei unterschiedlicher Temperatur betreibbar. Beim Kneten entsteht Friktionswärme, die vorzugsweise durch Kuhlen teilweise abgefuhrt wird, um Uberhitzung der Zusammensetzung zu vermeiden.

Vorzugsweise sind die Knetwerkzeuge fliegend gelagert. Die lagerseitige Gehäuse-Abschlußwandung ist dann mit Öffnungen für die Antriebswellen der Knetwerkzeuge versehen. Vorzugsweise hat das Gehäuse der Knetkammern eine quer zu den Werkzeugachsen verlaufende Trennstelle, so daß der der Lagerung abgewandte Gehäuseteil in axialer Richtung der Antriebswellen von der Trennstelle und den Knetwerkzeugen wegbewegbar ist. Eine derartig ausgestaltete Knetmaschine ist besonders leicht zu reinigen.

Eine solche Knetmaschine ist in der EP 807509 A beschrieben.

Die Massetemperaturen in den Knetkammern liegen bei dem erfindungsgemaßen Verfahren bei höchstens 280°C, vorzugsweise höchstens 240°C.

Nach der letzten Knetkammer wird der Kautschuk bevorzugt über ein kurzes flexibles Zwischenstück direkt in den Pilgerschrittkneter gedruckt, also in die zweite Stufe des Verfahrens. Aufgabe dieser Verfahrenseinheit ist intensives Kneten und eine gleichzeitige möglichst effektive Entgasung der Organopolysiloxanzusammensetzung. Zudem soll die Temperatur der Mischung längs des Pilgerschrittkneters reguliert, insbesondere annähernd konstant gehalten werden. Um diese Forderungen erfüllen zu können kann der Fachmann gerade bei großen Produktionsmaschinen eine Feinabstimmung folgender Parameter produktspezifisch vornehmen:
- Wellendrehzahl,
- Zahl und Querschnitt gegebenenfalls benötigter Stauringe, hierbei erweisen sich Stauringe, deren Stauwirkung ohne Öffnung des Kneters von aussen einstellbar ist, als sehr praktisch,
- Temperierung der einzelnen Schüsse und der Welle,
- Bestückung der Welle (Form und Zahl der Knetelemente, Förderelemente, Rückförderelemente),
- Bestückung der Zylinderschüsse mit Knetbolzen gegebenenfalls mit Knetrhomboedern,
- Zahl der erforderlichen Vakuumdome.

Neben diesen maschinentechnischen Einstellungen ist eine Optimierung der erforderlichen Höhe des angelegten Vakuums nötig, gegebenenfalls auch die Höhe eines evtl. erforderlichen Schleppgasvolumenstroms. Die Massetemperaturen liegen ebenfalls bei vorzugsweise maximal 280°C insbesondere maximal 240°C.

Im Pilgerschrittkneter können, falls erforderlich, weitere Zusätze (Z) zugespeist werden, insbesondere Strukturverbesserer (S).

Die HTV-Organopolysiloxanzusammensetzung durchlauft bei der Herstellung beide Verfahrensschritte ohne Produktzwischenlagerung.

Die weitere Aufarbeitung der dann gut gekneteten und entgasten HTV-Organopolysiloxanzusammensetzung ist unproblematisch und nicht Gegenstand der Erfindung.

Der Füllstoffgehalt der HTV-Organopolysiloxanzusammensetzungen (A) liegt bei 5 bis 80 Gew.-%, vorzugsweise bei 10 bis 50 Gew.-%. Besonders bevorzugt werden HTV-Organopolysiloxanzusammensetzungen (A) mit einem Füllstoffgehalt von 20 bis 40 Gew.-% hergestellt.

Als Füllstoffe (F) kommen sämtliche üblicherweise in Siliconmassen eingesetzte Füllstoffe in Frage, wobei auch Mischungen von verschiedenen Füllstoffen eingesetzt werden können. Geeignete Füllstoffe (F) sind beispielsweise Kieselsäuren, Ruße, Metalloxide, -carbonate, -sulfate, - nitride, Diatomeenerde, Tone, Kreiden, Glimmer, Metallpulver, Aktivkohle, Pulver organischer Kunststoffe etc. Wichtig ist, daß die Viskosität der füllstoffhaltigen HTV-Organopolysiloxanzusammensetzungen (A) aufgrund des Füllstoffgehaltes deutlich höher ist als die Viskosität des Organopolysiloxans (O), welches auf kontinuierliche Weise in diese füllstoffhaltige Siliconmasse eingemischt werden soll. Bevorzugt sind verstärkende Füllstoffe (F), also Füllstoffe mit einer spezifischen Oberfläche nach BET von mindestens 50 m²/g, vorzugsweise 50-500 m²/g, wie pyrogen erzeugte Kieselsäure, unter Erhalt der Struktur entwässerte Kieselsäurehydrogele, also sog. Aerogele, andere Arten von gefälltem Siliciumdioxid sowie Ruße. Die besonders bevorzugten pyrogen erzeugten Kieselsäuren, gefällten Kieselsäuren und Ruße können gegebenenfalls einer Oberflächenbehandlung unterworfen worden sein, um z.B. deren Dispergierbarkeit zu verbessern. vorhydrophobierte oxidische verstärkende Füllstoffe (F) mit einem durch die Hydrophobierung erhaltenen Kohlenstoffgehalt von mindestens 0,5 Gew.-% sind besonders bevorzugt.

Enthalten sein können insbesondere auch die in reiner Form bei Raumtemperatur festen Siliconharze vom Typ der M_{w}DₓT_{y}Q_{z}-Siliconharze.

Bei den der HTV-Organopolysiloxanzusammensetzung (A) zugrunde liegenden Organopolysiloxane (O) kann es sich um eines oder um eine Mischung unterschiedlicher Organopolysiloxane (O) handeln. Im Grunde können sämtliche, dem Fachmann bei der Herstellung von HTV-Massen wohl bekannten, hinlänglich beschriebenen Organopolysiloxane (O) eingesetzt werden. Hierzu zählen lineare, verzweigte, cyclische oder harzartige Organopolysiloxane, die gegebenenfalls, meist zum Zwecke der Vernetzbarkeit funktionelle Gruppen enthalten können. Vorzugsweise werden lineare Organopolysiloxane (O) eingesetzt, wie Polydimethylsiloxane mit einem Polymerisationsgrad von 50 bis 9.000. Bevorzugte Organoreste der Organopolysiloxane (O) sind Methyl, Phenyl, Vinyl und Trifluorpropyl, besonders bevorzugt ist der Methyl-Rest. Die in den Polyorganosiloxanen bevorzugt befindlichen funktionellen Gruppen sind -SiOH, -SiOR, Si-Vinyl und -SiH, besonders bevorzugt ist die Vinyl-Gruppe. Besonders bevorzugte Organopolysiloxane (O) sind die üblicherweise zur Herstellung von hitzehärtenden HTV-Siliconmassen eingesetzten Organopolysiloxane (O) mit einem Brabenderwert von 200 bis 900 daNm bei 25°C gemessen, insbesondere von 400 bis 700 daNm. Die Zusammensetzung der Organopolysiloxane (O) entspricht vorzugsweise der durchschnittlichen allgemeinen Formel (1)

R¹ₐR²_{b}SiO_{(4-a-b)/2} (1),

in der die Reste
- **R**^{**1**}: gleiche oder verschiedene einwertige Si-gebundene Reste darstellen, ausgewählt aus -H -OH, -OR, wobei R einen C₁-C₁₀-Kohlenwasserstoffrest bezeichnet, sowie gegebenenfalls halogen- oder cyanosubstituierte, gegebenenfalls über eine zweiwertige organische Gruppe an Silicium gebundene C₁-C₁₀- Kohlenwasserstoffreste, die mindestens eine aliphatische Kohlenstoff-Kohlenstoff Mehrfachbindung enthalten,
- **R**^{**2**}: gleiche oder verschiedene einwertige Si-gebundene, gegebenenfalls halogen- oder cyanosubstituierte C₁-C₁₀-Kohlenwasserstoffreste sind, die keine aliphatischen Kohlenstoff-Kohlenstoff Mehrfachbindungen enthalten,
- **a**: eine nicht negative Zahl von 0 bis 1 ist, und
- **b**: eine nicht negative Zahl von 1 bis 2.1 ist.

**R**^{**1**} ist vorzugsweise eine Alkenylgruppe, die einer Reaktion mit einem SiH-funktionellen Vernetzungsmittel oder mit einem Peroxid zugänglich ist. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen an Silicium der Polymerkette gebunden sein können, bestehen beispielsweise aus Oxyalkyleneinheiten, wie solche der allgemeinen Formel (2)

-(O)ₚ[(CH₂)_{q}O]ᵣ- (2),

in der
- **p**: die Werte 0 oder 1, insbesondere 0,
- **q**: Werte von 1 bis 4, insbesondere 1 oder 2 und
- **r**: Werte von 1 bis 20, insbesondere von 1 bis 5 bedeuten.

Die Oxyalkyleneinheiten der allgemeinen Formel (2) sind links an ein Siliciumatom gebunden.

Die Reste **R**^{**1**} können in jeder Position der Polymerkette, insbesondere an den endständigen Siliciumatomen, gebunden sein.

**R**^{**2**} weist vorzugsweise 1 bis 6 Kohlenstoffatome auf. Insbesondere bevorzugt sind Methyl und Phenyl.

Die Struktur der Polyorganosiloxane der allgemeinen Formel (1) kann linear, cyclisch oder auch verzweigt sein. Der Gehalt an zu verzweigten Polyorganosiloxanen fuhrenden tri- und/oder tetrafunktionellen Einheiten, ist typischerweise sehr gering, namlich vorzugsweise höchstens 20 Mol-%, insbesondere höchstens 0,1 Mol-%.

Besonders bevorzugt ist die Verwendung Vinylgruppen enthaltender Polydimethylsiloxane, deren Moleküle der allgemeinen Formel (3)

(ViMe₂SiO_{1/2})_{c}(ViMeSiO)_{d}(Me₂SiO)ₑ(Me₃SiO_{1/2})_{f} (3),

entsprechen, wobei **Vi** Vinylrest und **Me** Methylrest bedeuten, die nichtnegativen ganzen Zahlen **c, d, e** und **f** folgende Relationen erfüllen: **c+d ≥** 1, **c+f** = 2, 1000<**(d+e)**<9000, vorzugsweise 3000<**(d+e)**<7000, und 0<(**d+1)**/**(d+e)**<1, vorzugsweise 0<(d+1)/**(d+e)**<0.1.

Die HTV-Organopolysiloxanzusammensetzungen (A) können Zusätze (Z) enthalten, die der Einstellung spezieller Eigenschaften dienen, insbesondere Verarbeitungshilfsmittel, wie Strukturverbesserer (S); Dispergierhilfsmittel; Hydrophobiermittel, beispielsweise Silazane, silanolhaltige Oligosiloxane; Destrukturierungsagenzien, Weichwalzmittel sowie Farb- und Pigmentzusätze, Inhibitoren, Beschleuniger, Katalysatoren, beispielsweise Pt-haltige Hydrosilylierungskatalysatoren; Vernetzer, beispielsweise SiH-haltige Siloxane, Peroxide; Haftvermittler, Hitzestabilisatoren, Antioxidantien etc. Besonders bevorzugte Zusatze sind die der Einarbeitung hydrophiler Füllstoffe (F), wie hydrophiler pyrogener oder gefällter Kieselsäure, dienenden Hydrophobiermittel, wie silanolhaltige Oligosiloxane und Organodisilazane, sowie trimethylsilyl-endständige Oligodimethylsiloxane.

Als Strukturverbesserer (S) sind bevorzugt Organopolysiloxane mit einer bei 25°C gemessenen Viskosität von 10 bis 200 mPa.s, insbesondere 20 bis 150 mPa.s. Bevorzugt sind silanolhaltige Oligosiloxane, trimethylsilyl-endblockierte Dimethyl(oligooder poly)siloxane. Vorzugsweise werden die Reste der Organopolysiloxane als Strukturverbesserer (S) ausgewählt aus Methyl-, Phenyl-, Vinyl- und Hydroxylgruppen.

Bei den nach dem erfindungsgemäßen Verfahren hergestellten HTV-Organopolysiloxanzusammensetzungen (A) handelt es sich um höherviskose Siliconmassen mit einer bei 25°C gemessenen Viskosität von mindestens 500 Pa.s. Das erfindungsgemäße Verfahren eignet sich besonders zur Herstellung höherviskoser Organopolysiloxanzusammensetzungen (A) mit einer bei 25°C gemessenen Brabenderplastizität von 100 bis 1.000 daN.m, sowie höchstviskose Organopolysiloxanzusammensetzungen (A) mit einer nach Mooney bestimmten Viskosität von 10 bis 200 Mooney-Einheiten (Mooney-Endwert, ML(1+4), 23°C, DIN 53523).

Bei den hitzehärtbaren HTV-Massen kann es sich auch um Basismischungen handeln, die der Herstellung von vernetzungsfähigen HTV-Fertigmassen dienen. Die hergestellten HTV-Massen können z.B. von der Art der peroxidischvernetzenden, durch Pt-katalysierte Additionsreaktion vernetzenden oder durch Kondensationsreaktion oder energiereiche Strahlung vernetzenden HTV-Massen sein.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke 0,10 MPa (abs.). Alle Viskositäten wurden bei 20°C bestimmt.

Allen das erfindungsgemäße Verfahren demonstrierenden Beispielen sowie Vergleichsbeispielen wurde eine Siliconkautschukmasse folgender Zusammensetzung zugrunde gelegt:

### HTV-Festpolymer:

100 Gew.-Teile eines HTV-Festpolymeres, welches bei einer Temperatur von 25°C und einer Scherrate von 0.81 1/sec eine Viskosität von ca. 20.000 Pa.s aufweist und gemäß des ¹H-NMR-Spektrums folgende zahlenmittlere Zusammensetzung besitzt:

Vi-Si(Me)₂-[OSi(Me)₂]ₘ-[OSiMeVi]ₙ-OSi(Me)₂-Vi,

wobei Me den Methylrest und Vi den Vinylrest bezeichnen, n+m ca. 6.000 ist und m/n ca. 3.000 beträgt.

### Strukturverbesserer:

16,7 Gew.-Teile eines Strukturverbesserers, welcher gemäß des ²⁹Si-NMR-Spektrums folgende zahlenmittlere Zusammensetzung besitzt:

HO-Si(Me)₂-[OSi(Me)₂]ₘ-OSi(Me)₂-OH,

wobei m ca. 14 ist und die bei einer Temperatur von 25°C gemessene Viskosität 41 mm²/s beträgt.

### Kieselsäure:

50 Gew.-Tl. einer unter der Bezeichnung Wacker HDK® T30 erhältliche pyrogen erzeugte Kieselsäure mit einer nach BET gemessenen spezifischen Oberfläche von 300 m²/g.

### Beispiel 1: erfindungsgemäßes Verfahren

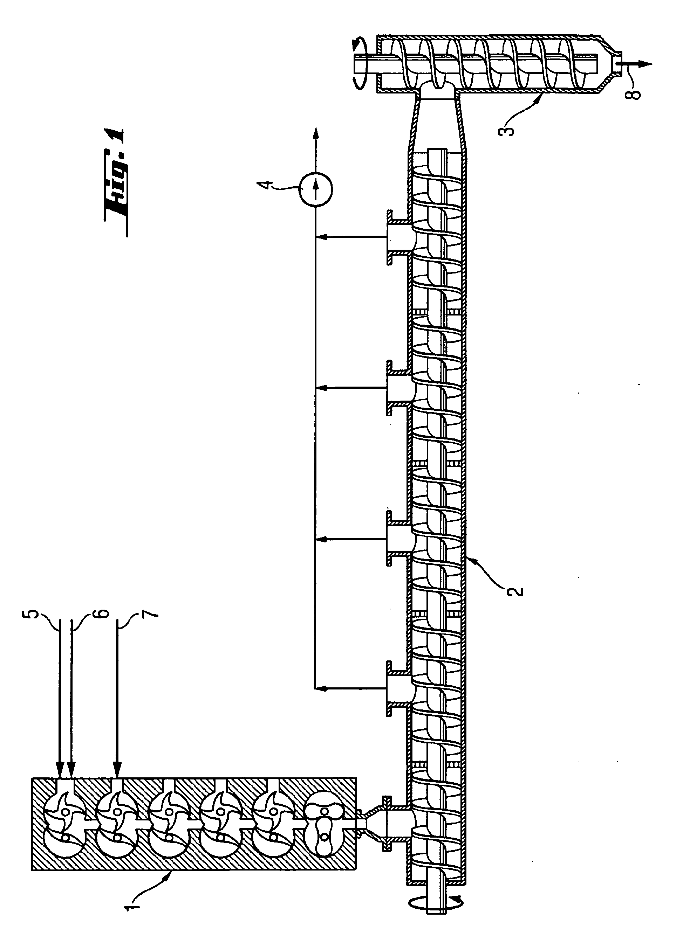

Das Verfahren wird anhand Fig. 1 beschrieben:
Für die 1. Stufe wurde eine Conterna® Knetkaskade (1) von IKA Maschinenbau Janke & Kunkel GmbH & Co.KG, Staufen eingesetzt. Die Knetkaskade (1) wies 6 Kammern zu je 10 1 Volumen auf. Der Gesamtdurchsatz betrug 200kg/h.

In die Kammer 1 wurde das Polymer (5) eindosiert (120kg/h), zudem der Strukturverbesserer (6) (20kg/h), in die Kammer 2 der Füllstoff (7) (60kg/h). Der Gesamtdurchsatz betrug folglich ca. 200kg/h. Die Drehzahlen in den Kammern 1-4 lagen bei 35 UpM. An Hand der Leistungsaufnahme der Einzelantriebe der Kammern konnte registriert werden, dass in der 2. und 3. Knetkammer wohl eine brockige Konsistenz der Masse vorlag. In der 4. Knetkammer war die Leistungaufnahme ruhiger und höher, hier lag eine homogene zusammenhängende Masse vor. Kammern 1 - 4 wurden mit 35 Upm betrieben. In den Kammern 5 und 6 wurden mit 40 UpM nachgeknetet und gleichzeitig erfolgte aus Kammer 6 der Produktaustrag. Die 6 Kammern wurden nicht gekühlt und nicht geheizt, die Temperaturen zogen von ca. 45°C in der 1. Kammer auf ca. 150°C in der 6. Kammer an.

Ohne Zwischenlagerung wurde die Rohmischung dem Kneter (2) der Firma "Buss Compounding Systems AG" vom Typ LR 100/19D zugeführt. Da beide Anlagenteile in ihrer Dimensionierung nicht aufeinander abgestimmt waren, mussten der Produktstrom im Verhältnis 120:80 geteilt werden. Hierzu wurde eine Breitschlitzdüse benutzt, die den Produktstrom über einen eingeschweißten Steg in den gewünschten Massenstrom teilte. 80kg/h wurden ausgeschleust **(nicht erfindungsgemäße Probe 1).** Die restlichen 120kg/h Kautschuk wurden in den Kneter (2) dosiert und der 2. erfindungsgemäße Verfahrensschritt wurde verifiziert.

Für die 2. Stufe wurde ein Kneter (2) der Firma "Buss Compounding Systems AG" vom Typ LR 100/19D eingesetzt. Der Kneter (2) gliederte sich in 5 Zonen(Schüsse) mit folgendem Aufbau: 1. Zone 3D, 2. - 5. Zone jeweils 4D. Alle Zonen waren über Stauringe voneinander getrennt. Mit Hilfe einer Vakuum-Wasserringpumpe (4) wurden die Zonen 2 -5 mit einem Vakuum in Höhe von 100mbar (abs.) beaufschlagt. Die Temperierung der einzelnen Schüsse und der Welle des Kneters (2) wurden so gewählt, daß sich beginnend ab dem 2. Schuss bei einer Wellendrehzahl von 150 UpM eine Produkttemperatur längs des Kneter (2) von ca. 180 -200°C einstellte. Die über die Knetkaskade (1) produzierte Rohmischung wurde in die Zone 1 des Kneter (2) mit einer Produkttemperatur von ca. 150°C dosiert. In den Zonen 2 - 5 wurde sie intensiv geknetet und dabei fluchtige Bestandteile der Kautschukmasse optimal entfernt. In den 2.-5. Schuß können Zusatzstoffe (Z) eingebracht werden. Über eine gekühlte Austragsschnecke (3) wurde der Kautschuk (8) ausgetragen und wurde als **erfindungsgemäße Probe 2** untersucht.

### Beispiel 2: nicht erfindungsgemäßes Verfahren (gemäß EP 1033389 A1, Beispiel 1)

Für die Versuche wurde ein Kneter (2) (nach Fig. 1) der Firma "Buss Compounding Systems AG" vom Typ LR 100/19D eingesetzt. In den ersten Schuß des Kneters (2) wurden 30 kg/h Polymer und 5 kg/h Strukturverbesserer dosiert. Im 2. Schuß wurden 15 kg/h hochdisperse Kieselsäure (HDK) dem Kneter (2) zugeführt. Der 3. bis 5. Schuß dienten als Knet- und Entgasungszone. Angelegt wurde ein Vakuum, erzeugt mit Hilfe einer Wasserringpumpe (4). Die Temperatur der Siliconkautschukmasse bei einer Wellendrehzahl von 180 U/min wurde durch Temperierung der Welle und der einzelnen Schüsse des Zylinders so gestaltet, daß an den Temperaturmeßstellen des Kneters (2) ca. 150°C/200°C/180°C gemessen wurden. Der Produktaustrag aus dem Kneter erfolgte über eine nachgeschaltete kurze Austragsschnecke (3). Der Produktstrom nach der Austragsschnecke wurde über eine mit einem Steg versehene Breitschlitzdüse geteilt, wobei 50 kg/h als nicht gestrainerte Siliconkautschukmasse ausgeschleust wurden **(nicht erfindungsgemäße Probe 3)** und die übrigen 16 kg/h retour über ein Förderband in den 1. Schuß des Kneters geführt wurden.

### Beispiel 3: nicht erfindungsgemäßes Verfahren (gemäß EP 1033389 A1, Beispiel 3)

Der Kneter (2) wurde mit den Beispiel 2 rezepturkonformen Mengen an Einsatzstoffen (HTV-Festpolymer, Strukturverbesserer, Kieselsäure) beschickt, so daß ein Durchsatz von 50 kg/h resultierte. Die Einstellung eines dem Beispiel 2 vergleichbaren Temperaturprofiles erfolgte über eine entsprechende Mantel- und Wellentemperierung. Der Produktaustrag **(nicht erfindungsgemäße Probe 4)** aus dem Kneter erfolgte über eine nachgeschaltete kurze Austragsschnecke (3).

### Prüfung der hergestellten Siliconkautschukmassen

Die Proben 1 - 4 wurden hinsichtlich ihrer Lagerstabilitat über einen Zeitraum von 3 Monaten beurteilt, also Messungen der Mooney-Viskosität in definierten Zeitintervallen, Beurteilung des Verhaltens auf dem Walzwerk. In der Tabelle ist nur die qualitative Probenbeurteilung nach 3 Monaten aufgeführt.

Am nicht vulkanisierten Kautschuk wurde ferner die Flüchtigkeit bei 200°C gemessen. Bedingungen: 1g Kautschuk/4h/200°C, Angabe in % flüchtige Bestandteile.

Der Kautschuk wurde
a)-mit 0,7% Dicumylperoxid(Vernetzer 1) 15 Minuten bei 165°C oder
b)-mit 1,5% Di(2,4-)Dichlorobenzoyl)peroxide(50%ig)(Vernetzer 2) 10 Minuten bei 135°C
in einer beheizten Presse zwischen Platten vulkanisiert. Die Vulkanisate wurden anschließend im Umluftschrank 4h bei 200°C getempert, danach das Aussehen dieser Vulkanisate beurteilt, also den Grad der Verfärbung.
1= nicht verfärbt, 4= stark verfärbt

**Probe Lagerstabilität Flüchtigkeit Verfärbung der Vulkanisate**

| | | | Vernetzer 2 | Vernetzer 1 |
|---|---|---|---|---|
| 1* | mittel | 1,9% | 3 | 4 |
| **2** | **gut** | **0,5%** | **1** | **1 - 2** |
| 3* | gut | 1,4% | 1 - 2 | 2 - 3 |
| 4* | schlecht | 1,3% | 1 - 2 | 2 - 3 |

| | | | | |
|---|---|---|---|---|
| * nicht erfindungsgemäß | | | | |

## Patentansprüche

1. Verfahren zur Herstellung von HTV-Organopolysiloxanzusammensetzungen mit einer bei 25°C gemessenen Viskosität von mindestens 500 Pa.s., bei dem Organopolysiloxane und Füllstoffe in einer ersten Verfahrensstufe in einer Knetkaskade mit wenigstens zwei in Reihe nebeneinander angeordneten Knetkammern, die jeweils zwei achsparallele, gleich- oder gegensinnig antreibbare Knetwerkzeuge enthalten und die durch quer zu den Achsen der Knetwerkzeuge passierbare Öffnungen miteinander verbunden sind, wobei die erste Knetkammer eine Beschickungsöffnung und die letzte Knetkammer eine Austragsöffnung aufweisen, zu Rohmischungen vermischt und geknetet werden und die Rohmischungen in einer zweiten Verfahrensstufe in einem oszillierenden Pilgerschrittkneter geknetet und entgast werden.

2. Verfahren nach Anspruch 1, bei dem die Knetkaskade aus 3 bis 10 Knetkammern besteht.

3. Verfahren nach Anspruch 1 oder 2, bei dem die Knetwerkzeuge der Knetkaskade ausgewählt werden aus Knetschaufeln, Walzen und Polygonscheiben.

4. Verfahren nach Anspruch 1 bis 3, bei dem die Temperatur der Mischung längs des Pilgerschrittkneters durch Stauringe, deren Stauwirkung ohne Öffnen des Kneters von aussen einstellbar ist, reguliert wird.

5. Verfahren nach Anspruch 1 bis 4, bei dem der Füllstoffgehalt der HTV-Organopolysiloxanzusammensetzungen bei 5 bis 80 Gew.-% liegt.

6. Verfahren nach Anspruch 1 bis 5, bei dem als Füllstoffe Kieselsäuren mit einer spezifischen Oberfläche nach BET von mindestens 50 m²/g eingesetzt werden.

7. Verfahren nach Anspruch 1 bis 6, bei dem als Organopolysiloxane Polydimethylsiloxane eingesetzt werden, deren Moleküle der allgemeinen Formel (3)
(ViMe₂SiO_{1/2})_{c}(ViMeSiO)_{d}(Me₂SiO)ₑ(Me₃SiO_{1/2})_{f} (3),
entsprechen, wobei **Vi** Vinylrest und **Me** Methylrest bedeuten, die nichtnegativen ganzen Zahlen **c, d, e** und **f** folgende Relationen erfüllen: **c+d** ≥ 1, **c+f** = 2, 1000<**(d+e)**<9000, vorzugsweise 3000<**(d+e)**<7000, und 0<**(d**+1**)**/**(d+e)**<1, vorzugsweise 0<(**d**+1)/**(d+e)**<0.1.

8. Verfahren nach Anspruch 1 bis 7, bei dem als Strukturverbesserer Organopolysiloxane mit einer bei 25°C gemessenen Viskosität von 10 bis 200 mPa.s zugesetzt werden.

## Claims

1. Process for preparing HTV organopolysiloxane compositions having a viscosity measured at 25°C of at least 500 Pa.s., in which organopolysiloxanes and fillers are, in a first process stage, mixed and kneaded in a kneading cascade having at least two kneading chambers which are arranged in series next to one another and each contain two kneading tools having parallel axes and capable of being driven in corotating or counter-rotating directions and which are connected to one another by means of openings through which material can pass in a direction transverse to the axes of the kneading tools, with the first kneading chamber having a feed opening and the last kneading chamber having a discharge opening, to give raw mixtures and the raw mixtures are, in a second process stage, kneaded and degassed in a reciprocating kneader.

2. Process according to Claim 1, wherein the kneading cascade comprises from 3 to 10 kneading chambers.

3. Process according to Claim 1 or 2, wherein the kneading tools of the kneading cascade are selected from among kneading blades, rollers and polygonal plates.

4. Process according to any of Claims 1 to 3, wherein the temperature of the mixture along the reciprocating kneader is regulated by means of orifice plates whose flow-reducing action can be adjusted from the outside without opening the kneader.

5. Process according to any of Claims 1 to 4, wherein the filler content of the HTV organopolysiloxane compositions is from 5 to 80% by weight.

6. Process according to any of Claims 1 to 5, wherein silicas having a specific surface area determined by the BET method of at least 50 m²/g are used as fillers.

7. Process according to any of Claims 1 to 6, wherein polydimethylsiloxanes whose molecules have the formula (3)
(ViMe₂SiO_{1/2})_{c}(ViMeSiO)_{d}(Me₂SiO)ₑ(Me₃SiO_{1/2})_{f} (3)
where **Vi** is a vinyl radical and **Me** is a methyl radical, and the non-negative integers **c, d, e** and **f** obey the following relationships: **c+d** ≥ 1, **c+f** = 2, 1000<(**d+e**)<9000, preferably 3000<(**d+e**)<7000, and 0< (**d**+1) / (**d+e**) <1, preferably 0< (**d**+1) / (**d+e**) <0 .1, are used as organopolysiloxanes.

8. Process according to any of Claims 1 to 7, wherein organopolysiloxanes having a viscosity measured at 25°C of from 10 to 200 mPa.s are added as structure improvers.

## Revendications

1. Procédé de préparation de compositions d'organopolysiloxane HTV présentant une viscosité mesurée à 25°C d'au moins 500 Pa.s., dans lequel des organopolysiloxanes et des charges sont transformés et malaxés en mélanges bruts dans une première étape de procédé dans une cascade de malaxage comprenant au moins deux chambres de malaxage disposées en série l'une à côté de l'autre, qui contiennent à chaque fois deux outils de malaxage à axes parallèles, pouvant être entraînés dans le même sens ou dans un sens opposé et qui sont raccordées l'une à l'autre par des ouvertures pouvant être traversées transversalement par rapport aux axes des outils de malaxage, la première chambre de malaxage présentant une ouverture de chargement et la dernière chambre de malaxage présentant une ouverture d'évacuation et les mélanges bruts sont malaxés et dégazés dans une deuxième étape de procédé dans un malaxeur oscillant à pas de pèlerin.

2. Procédé selon la revendication 1, dans lequel la cascade de malaxage est constituée par 3 à 10 chambres de malaxage.

3. Procédé selon la revendication 1 ou 2, dans lequel les outils de malaxage de la cascade de malaxage sont choisis parmi les socs de malaxage, les cylindres et les disques polygonaux.

4. Procédé selon la revendication 1 à 3, dans lequel la température du mélange le long du malaxeur à pas de pèlerin est régulée via des bagues de retenue, dont l'effet de retenue peut être réglé à partir de l'extérieur sans ouverture du malaxeur.

5. Procédé selon la revendication 1 à 4, dans lequel la teneur en charge des compositions d'organopolysiloxane HTV est de 5 à 80% en poids.

6. Procédé selon la revendication 1 à 5, dans lequel on utilise comme charges des silices présentant une surface spécifique selon BET d'au moins 50 m²/g.

7. Procédé selon la revendication 1 à 6, dans lequel on utilise comme organopolysiloxanes des polydiméthylsiloxanes dont les molécules correspondent à la formule générale (3)
(ViMe₂SiO_{1/2})_{c}(ViMeSiO)_{d}(Me₂SiO)ₑ(Me₃SiO_{1/2})_{f} (3),
où Vi signifie le radical vinyle et Me le radical méthyle, les nombres entiers non négatifs c, d, e et f satisfaisant aux relations suivantes : c+d ≥ 1, c+f = 2, 1 000<(d+e)<9 000, de préférence 3 000<(d+e)<7 000, et 0< (d+1) / (d+e) <1, de préférence 0< (d+1) / (d+e) <0, 1.

8. Procédé selon la revendication 1 à 7, dans lequel on ajoute comme agent d'amélioration de la structure des organopolysiloxanes présentant une viscosité mesurée à 25°C de 10 à 200 mPa.s.
